Europäisches Patentamt

European Patent Office

Office européen des brevets

(19)

(11) Numéro de publication : **0 428 444 B1**

(12) **FASCICULE DE BREVET EUROPEEN**

(45) Date de publication du fascicule du brevet :
**01.02.95 Bulletin 95/05**

(51) Int. Cl.$^6$ : **H04B 1/66,** H04K 3/00

(21) Numéro de dépôt : **90403191.1**

(22) Date de dépôt : **09.11.90**

(54) **Procédé de recherche de synchronisation à la réception d'un signal modulé à étalement de spectre.**

(30) Priorité : **15.11.89 FR 8914968**

(43) Date de publication de la demande :
**22.05.91 Bulletin 91/21**

(45) Mention de la délivrance du brevet :
**01.02.95 Bulletin 95/05**

(84) Etats contractants désignés :
**DE GB**

(56) Documents cités :
**EP-A- 0 334 108**
**IEEE TRANSACTIONS ON COMMUNICA-**
**TIONS. vol. COM25, no. 8, août 1977, NEW**
**YORK US pages 832 - 839; C.R.CAHN et al.:**
**"Software implementation of a PN Spread**
**Spectrum Receiver to accomodate dynamics"**
**HOLMES: "COHERENT SPREAD SPECTRUM**
**SYSTEMS" 1982, John Wiley, New York**

(73) Titulaire : **FRANCE TELECOM**
**6, Place d'Alleray**
**F-75015 Paris (FR)**

(72) Inventeur : **Cornec, Jean-Paul**
**Rue Guy Ropartz,**
**Brélévenez**
**F-22300 Lannion (FR)**
Inventeur : **Gay, Philippe**
**8 Domaine Duguay Trouin**
**F-22700 Perros-Guirec (FR)**

(74) Mandataire : **Martinet & Lapoux**
**BP 405**
**F-78055 St. Quentin en Yvelines Cédex (FR)**

EP 0 428 444 B1

# Description

La présente invention concerne un procédé et un dispositif de recherche de synchronisation et de fréquence de porteuse à la réception, dans un démodulateur, d'une transmission numérique en étalement de spectre.

Plus particulièrement, l'invention se rapporte à un signal reçu qui a subi, dans un modulateur, une modulation directe par séquence pseudoaléatoire, modulation dite parfois séquence directe. Le signal reçu dans le démodulateur est un signal résultant d'une modulation en phase d'une porteuse par un signal de données et par un signal à séquence pseudoaléatoire numérique. Dans ce type de transmission, la puissance du signal utile est très inférieure à la puissance du bruit thermique ou autre parasite reçu simultanément. Le démodulateur n'a aucune information préalable aussi bien sur la phase de la séquence d'étalement de spectre du signal reçu que sur la valeur précise de la fréquence porteuse du signal reçu. L'incertitude sur la valeur de la fréquence porteuse peut correspondre à $10^{-5}$ à $10^{-6}$ en valeur relative.

Un tel procédé de transmission est particulièrement mis en oeuvre pour des transmissions à Accès Multiple par Répartition par Code (A.M.R.C.) : une certaine bande de fréquence centrée sur la porteuse est partagée par plusieurs communications simultanément, et chaque communication occupe à tout instant la totalité de la bande. De telles transmissions peuvent être effectuées entre des stations fixes ou mobiles par satellite, entre stations et relais radio terrestres, pour des liaisons directes à courte distance entre petites stations mobiles terrestres, ainsi que pour des liaisons numériques sur fibres optiques.

Dans ce type de transmission, le problème essentiel à la réception du signal étalé est la synchronisation initiale de la séquence pseudoaléatoire locale produite dans le récepteur avec la séquence pseudoaléatoire dans le signal reçu. Le signal reçu subit classiquement un changement de fréquence vers une fréquence intermédiaire, par hétérodynage avec le signal local délivré par un oscillateur à une fréquence voisine de la fréquence porteuse. Le signal local est préalablement modulé par une séquence pseudoaléatoire générée localement et identique à celle contenue dans le signal reçu mais dont la phase par rapport à la séquence reçue est à rechercher.

La synchronisation entre la séquence reçue et la séquence locale s'effectue par une méthode de glissement de phase qui est décrite par Jack K. HOLMES, dans le livre "Coherent spread spectrum systems", Edition John Wiley & Sons, New York, 1982, chapitre 9, particulièrement paragraphe 9.2.3, pages 411 à 419.

J.K. HOLMES fait appel à l'itération d'étapes à double intégration du signal à fréquence intermédiaire résultant de la corrélation entre le signal reçu et le signal modulé localement. La séquence produite localement est appliquée au signal reçu en la décalant successivement par pas d'un demi-bit par rapport à la séquence dans le signal reçu. Chaque décalage est suivi d'une intégration du signal de corrélation sur une première durée prédéterminée après que le signal de corrélation ait été filtré et redressé. Si le signal intégré excède un seuil prédéterminé, le démodulateur procède à une seconde intégration pendant une seconde durée prédéterminée, généralement égale à un multiple entier de la première durée, et au terme de cette seconde intégration compare le signal intégré à un second seuil de tension généralement égal au premier. Si à nouveau le signal intégré dépasse le seuil de tension, la synchronisation des séquences est déclarée acquise.

Si le seuil n'est pas dépassé à l'issue de la première ou de la seconde intégration, le démodulateur produit un nouveau décalage d'un demi-bit de la séquence locale par rapport à la séquence reçue, et recommence le cycle de la double intégration décrite ci-dessus. Pendant toute la durée de la recherche de la synchronisation de séquence, la tension de commande de l'oscillateur local qui fournit la fréquence d'horloge au générateur de séquence pseudoaléatoire est fixée à une valeur prédéterminée, telle que la fréquence d'horloge soit égale à une valeur moyenne de fonctionnement.

Toutefois, pour que les deux décisions faisant suite aux intégrations successives soient interprétées convenablement, il est implicite que l'oscillateur générant la fréquence locale soit réglé sur la valeur exacte de la porteuse reçue. En effet, d'une part le signal est noyé dans du bruit thermique, et la porteuse elle-même est supprimée lors de la modulation dans le modulateur. D'autre part, la valeur de la porteuse est indéterminée à plusieurs dizaines de kilohertz près, en pratique à plus ou moins 100 kHs environ lorsque par exemple les fréquences de transmission sont supérieures à plusieurs GHz. Cette indétermination peut résulter notamment des transpositions en fréquence. En outre, à ces indéterminations viennent s'ajouter celles influencées par l'effet Doppler.

Il apparaît donc que dans le démodulateur, l'exploitation des données supportées par le signal reçu présuppose préalablement la levée de deux indéterminations concernant le signal reçu :
- la phase de la séquence d'étalement, et
- la valeur de la fréquence de la porteuse.

Actuellement, dans les démodulateurs à étalement de spectre pour récepteurs autonomes, c'est-à-dire ne recevant pas la porteuse pure indirectement soit par un moyen de transmission supplémentaire, soit par l'intermédiaire d'un signal décalé en fréquence, le démodulateur recherche la valeur de la porteuse par un balayage alternatif et continu du domaine d'incertitude de la fréquence porteuse.

Ce balayage est obtenu en appliquant une tension en dents de scie ou sinusoïdale à l'oscillateur local produisant la fréquence locale proche de la fréquence porteuse. La période du balayage est généralement longue, typiquement de l'ordre d'une seconde, pour tenir compte des temps de réaction et de stabilisation des circuits impliqués dans la recherche de synchronisation, lesdits circuits étant notamment des filtre, détecteur et intégrateur. Des tentatives répétées de synchronisation des séquences, par exemple selon la méthode de double intégration décrite ci-dessus, se superposent à ce balayage en fréquence. Dès que la synchronisation est obtenue, c'est-à-dire dès qu'une intégration a donné un résultat positif, le décalage de la séquence locale est arrêté. Ce procédé connu a le défaut d'être lente et demande en pratique plusieurs dizaines de secondes pour acquérir la synchronisation des séquences et la fréquence porteuse.

Le but de la présente invention est de fournir un procédé de recherche simultané de la synchronisation des séquences d'étalement et de la fréquence de la porteuse pour récepteur autonome, beaucoup plus rapide que le procédé antérieur décrit ci-dessus. En particulier, le procédé selon l'invention ne recourt pas à un balayage continu et lent du domaine d'incertitude de la fréquence de la porteuse, mais fait appel à un balayage rapide en ne sélectionnant que des valeurs discrètes de fréquence.

A cette fin, un procédé de recherche de synchronisation et de fréquence d'une porteuse afin de démoduler un signal reçu résultant de la modulation en phase par un signal de données, d'une séquence pseudoaléatoire numérique modulant en phase ladite porteuse et ayant une longueur de L bits,

procédé selon lequel un signal local ayant une fréquence locale voisine de la fréquence de ladite porteuse est modulé en phase par une séquence pseudoaléatoire numérique locale identique à la séquence dans le signal reçu et est mélangé audit signal reçu en un signal mélangé à fréquence intermédiaire, et ledit signal mélangé est filtré dans une bande de fréquence de filtrage centrée sur une fréquence intermédiaire prédéterminée et ayant une largeur prédéterminée en un signal filtré, et

procédé qui comprend une étape d'intégration consistant à intégrer le signal filtré en un signal intégré pendant au moins une durée prédéterminée et à comparer le signal filtré à au moins un seuil prédéterminé pour une valeur déterminée de la fréquence locale et un décalage déterminé de la séquence locale par rapport à la séquence de signal reçu,

est caractérisé en ce qu'il comprend

- plusieurs séries successives d'étape d'intégration respectivement pour des premières valeurs discrètes prédéterminées de la fréquence locale correspondant à des premières fréquences intermédiaires sensiblement équiréparties dans une bande incluant largement la bande de filtrage, chaque série d'étape comprenant au moins 2L étapes d'intégration correspondant à 2L décalages temporels successifs d'un demi-bit de la séquence locale respectivement, et la variation discrète de la fréquence locale et le décalage d'un demi-bit de la séquence locale cessant à une première fréquence intermédiaire trouvée et à un décalage temporel trouvé dès que le signal intégré excède ledit seuil prédéterminé, et

- un nombre prédéterminé de dernières étapes d'intégration pour lesquelles la séquence locale ne subit aucun décalage temporel et pendant lesquelles la fréquence locale est estimée respectivement à des secondes valeurs discrètes respectives qui sont déduites l'une de l'autre d'un second pas de fréquence inférieur à l'écart entre doux premières fréquences intermédiaires et qui correspondent à des fréquences intermédiaires comprises dans une seconde bande de fréquence centrée sur ladite première fréquence trouvée et plus large que la bande de filtrage, chacune des dernières étapes à la fin de laquelle ledit signal intégré excède ledit seuil étant déclaré favorable et

- le calcul d'un paramètre variant linéairement avec la fréquence moyenne des fréquences locales qui correspondent respectivement aux dernières étapes favorables afin de caler le signal local à ladite fréquence moyenne.

La fréquence moyenne locale est alors quasiment égale à la fréquence de la porteuse du signal reçu qui peut varier de quelques dizaines de kHz.

Selon une autre caractéristique de l'invention, le procédé comprend, après lesdites plusieurs séries successives d'étapes d'intégration et avant lesdites dernières étapes d'intégration, un centrage de la fréquence intermédiaire par variation discrète de ladite fréquence locale et par rapport à la fréquence centrale de ladite bande de filtrage, sans décalage temporel de séquence,

ledit centrage de fréquence consistant

à effectuer successivement deux étapes d'intégration pour des troisième et quatrième fréquences dont la moyenne est sensiblement égale à la première fréquence trouvée et dont la différence est inférieure à la largeur de la bande de filtrage, et

à remplacer la première fréquence trouvée, en tant que fréquence centrale de la seconde bande de fréquence, par une seconde fréquence trouvée égale à la moyenne des fréquences incluant la première fréquence trouvée et lesdites troisième et quatrième fréquences et ayant donné lieu à un signal intégré (SI) excédant ledit seuil.

Un dispositif de synchronisation de séquence et de recherche de porteuse mettant en oeuvre le procédé selon l'invention comprend des moyens pour produire un signal à fréquence locale prédéterminée, des moyens pour générer une séquence pseudoaléatoire numérique locale, et un premier corrélateur, ledit corrélateur comprenant des premiers moyens de modulation pour moduler en phase le signal à fréquence locale par la séquence locale en un signal modulé, des seconds moyens de modulation pour moduler en phase le signal reçu par le signal modulé en un signal mélangé, des moyens pour filtrer le signal mélangé en le signal filtré, des moyens pour intégrer le signal filtré en le signal intégré, et des moyens pour comparer le signal intégré au seuil prédéterminé. Le dispositif comprend également des moyens de contrôle pour modifier la durée d'intégration dans les moyens pour intégrer et un décalage temporel de séquence locale dans les moyens pour générer en fonction d'un signal logique produit par les moyens pour comparer. Le dispositif est caractérisé en ce qu'il comprend des moyens commandés par les moyens de contrôle pour modifier ladite fréquence locale dans les moyens pour produire afin que la fréquence locale puisse être notamment égale auxdites premières valeurs discrètes prédéterminées et aux secondes valeurs discrètes.

Un tel dispositif peut être inclus dans un démodulateur dit à séquence directe. Le démodulateur comprend, en outre, un second corrélateur recevant ledit signal reçu et recevant alternativement, sous la commande desdits moyens de contrôle, deux séquences pseudoaléatoires déduites de la séquence locale par une avance et un retard d'un demi-bit. Le second corrélateur produit alternativement deux signaux de corrélation qui correspondent respectivement à la corrélation entre la séquence reçue et la séquence en avance et à la corrélation entre la séquence reçue et la séquence en retard, après que la phase d'acquisition de fréquence et de synchronisation soit achevée. Les corrélateurs comprennent des amplificateurs à gain variable respectifs commandés par les moyens de contrôle. Le démodulateur est caractérisé en ce que les gains des amplificateurs sont fonction de la somme des deux signaux de corrélation qui sont produits par le second corrélateur.

D'autres avantages et caractéristiques de la présente invention apparaîtront plus clairement à la lecture de plusieurs réalisations préférées de l'invention en référence aux dessins annexés correspondants dans lesquels :

- la Fig. 1 est un bloc-diagramme schématique d'un dispositif de synchronisation de séquence et de recherche de porteuse selon l'invention ;
- la Fig. 2 est un diagramme de fréquence illustrant une première étape principale du procédé selon l'invention, relative à une recherche de synchronisation des séquences locale et reçue et à une évaluation grossière de la fréquence de la porteuse reçue ;
- la Fig. 3 est un diagramme de fréquence illustrant une seconde étape principale du procédé selon l'invention, relative à un centrage approximatif de la fréquence locale par rapport à la bande de filtrage d'un filtre passe-bande du démodulateur ;
- la Fig. 4 est un diagramme de fréquence pour illustrer une troisième étape principale du procédé selon l'invention, relative à une recherche fine de la valeur de la porteuse reçue ;
- la Fig. 5 est un bloc-diagramme schématique d'un démodulateur à étalement de spectre comprenant deux corrélateurs, selon l'invention ;
- les Fig. 6A et 6B sont des diagrammes temporels montrant respectivement des variations d'amplitude de deux signaux intégrés dans un second corrélateur à avance-retard inclus dans le démodulateur de la Fig. 5 ;
- la Fig. 7 est un diagramme temporel de la différence des deux signaux des Figs. 6A et 6B ; et
- la Fig. 8 est un diagramme temporel de la somme des deux signaux montrés aux Figs. 6A et 6B.

Afin de fixer les idées, la description ci-après d'un dispositif de synchronisation de séquence et de recherche de porteuse 1 est accompagnée de valeurs numériques données à titre d'exemple préféré. Le dispositif peut être inclus dans un démodulateur de phase d'un modem qui est décrit plus en détail dans la suite.

En entrée, le dispositif 1 reçoit un signal à radiofréquence RF ayant une fréquence porteuse $FP \cong 70$ MHz déterminée à une centaine de kHz près. En pratique le signal RF est transmis par exemple, à travers une voie radioélectrique transposée à quelques gigahertz, par un modulateur d'émetteur. Dans le modulateur, un signal numérique de données à bas débit, $DD = 16$ kbit/s, module en phase un train de séquence numérique pseudoaléatoire en un signal numérique modulé qui lui-même module en phase une porteuse à fréquence élevée de $FP \cong 70$ MHz à $DI/2 = \pm 70$ kHz environ. Les bits de séquence ont un débit très élevé $DS = 4$ Mbit/s $\gg DD$. La séquence a une longueur déterminée $L = 127$ bits et est indépendante des données. On suppose que les modulations de phase sont à deux ou quatre états, typiquement du type à deux états MDP2. En pratique, le signal de données et le train de séquence sont additionnés modulo-2 en un signal numérique modulé qui module en MDP2 ou MDP4 la porteuse, en ledit signal à radiofréquence RF. Un tel signal est un signal de modulation directe par séquence pseudoaléatoire, modulation qui entre dans l'une des deux catégories des modulations à étalement de spectre.

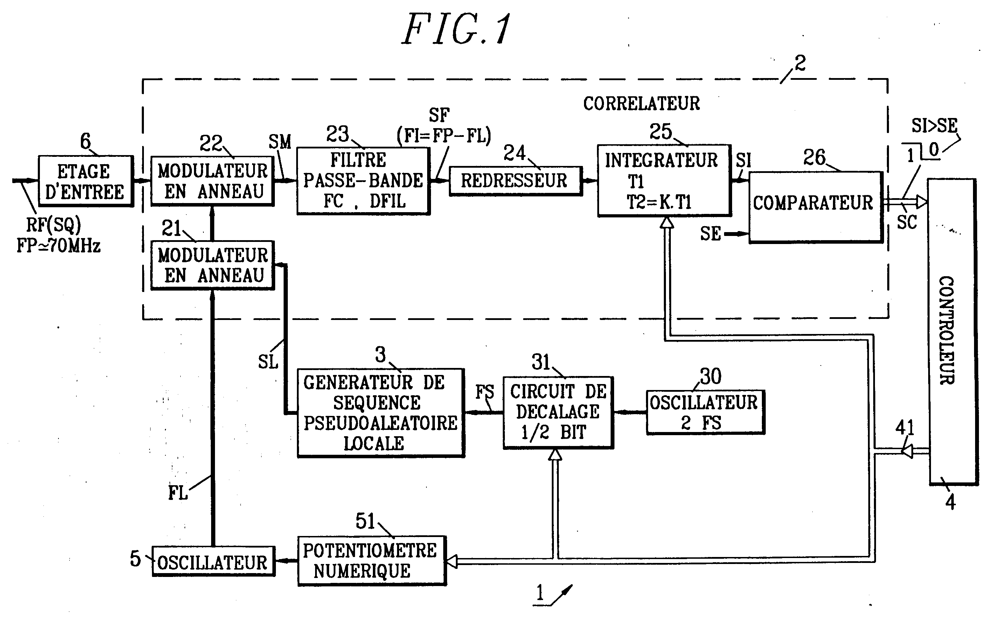

En référence à la Fig. 1, le dispositif de synchronisation de séquence et de recherche de porteuse 1 comprend essentiellement un corrélateur de séquence 2, un générateur de séquence pseudoaléatoire locale 3 associé à un oscillateur 30, un contrôleur à microprocesseur 4, et un oscillateur de fréquence locale 5.

Une première entrée du corrélateur 2 reçoit le signal à radiofréquence RF à travers un étage d'entrée 6 qui amplifie et filtre passe-bande le signal RF. Le premier oscillateur 5 a une fréquence locale FL voisine de la fréquence porteuse FP et est commandé en tension par le contrôleur 4 à travers un potentiomètre numérique 51. La fréquence nominale de la fréquence locale FL est 69,545 MHz. Le second oscillateur 30 transmet un signal d'horloge à fréquence 2FS=8 MHz à un circuit de décalage d'un demi-bit 31. Le circuit 31 fournit au générateur de séquence 3 un signal d'horloge ayant la fréquence FS. La fréquence FS est supposée ici constante et égale au débit de la séquence pseudoaléatoire reçue SQ, soit FS=4 MHz. Le décalage dans le circuit 31 est commandé par le contrôleur 4 et évalué par rapport aux séquences reçues. La sortie du générateur 3 transmet périodiquement une séquence pseudoaléatoire locale SL qui est appliquée à une première entrée d'un modulateur en anneau 21 inclus dans le corrélateur 2. Une seconde entrée du modulateur 21 reçoit le signal à la fréquence de porteuse locale FL produite par le premier oscillateur 5, afin que ce signal soit modulé en phase par la séquence locale SL.

Le corrélateur 2 comprend également un second modulateur en anneau 22 dont une première entrée reçoit le signal à radiofréquence RF transmis par le modulateur d'émetteur éloigné à travers l'étage d'entrée 6 et dont une seconde entrée est reliée à la sortie du premier modulateur 21. Le modulateur en anneau 22 produit en sortie un signal mélangé SM ayant une fréquence intermédiaire FI=FP-FL≅455 kHz résultant de la transposition en fréquence de la porteuse FP par la fréquence FL de l'oscillateur 5. Lorsque la synchronisation est acquise aussi bien par rapport à la phase des séquences que par rapport à la fréquence de porteuse, c'est-à-dire en fonctionnement permanent du démodulateur, le signal SM ne contient plus que l'information utile au débit DD modulant la porteuse. Les séquences pseudoaléatoires ont disparu dans le signal mélangé SM du fait que le modulateur en anneau 22 remodule une seconde fois le signal RF par sauts de phase de $\pi$ commandés par la séquence locale lorsqu'elles sont synchrones. Le corrélateur 2 est ainsi équivalent à un détecteur hétérodyne permettant de traiter à une fréquence intermédiaire la corrélation entre signal local modulé et signal reçu RF.

A la sortie du modulateur en anneau 22 sont reliés en série, dans le corrélateur 2, un filtre passe-bande 23, un redresseur à double alternance 24, un intégrateur 25 commandé par le contrôleur 4, et un comparateur de tension 26 dont la sortie logique est reliée au contrôleur 4.

Le filtre passe-bande 23 sert à prélever une bande de fréquence correspondant au signal utile de données et donc à diminuer la plupart des parasites reçus. Le filtre passe-bande 23 est un filtre actif dont la bande passante a une largeur DFIL=60 kHz et est centrée sur une fréquence prédéterminée FC. La fréquence FC étant quasi-constante et égale à 455 kHz, il apparaît donc que la fréquence locale FL du premier oscillateur 5 doit être ajustée en fonction de la fréquence de porteuse inconnue FP du signal reçu RF de telle manière que la fréquence intermédiaire FI=FP-FL soit quasiment centrée dans la bande DFIL avec un domaine d'incertitude de DI≅140 kHz. Dans ce cas, si la séquence produite par le générateur 3 est synchronisée avec la séquence reçue SQ dans le signal RF, le signal filtré SF à fréquence intermédiaire FI sortant du filtre 23 peut être convenablement démodulé en phase afin d'éliminer la porteuse et de retrouver le signal de données au débit DD.

Le redresseur 24 et l'intégrateur 25 ont pour fonction de produire un signal intégré SI résultant d'une enveloppe du signal filtré SF qui sort du redresseur 24, et d'une intégration de l'enveloppe pendant une durée d'intégration déterminée par le contrôleur 4 à travers un bus 41. L'amplitude du signal intégré SI quantifie la corrélation entre les séquences SL produites par le générateur 3 et les séquences reçues incluses dans le signal RF. En effet, l'augmentation de l'amplitude du signal SI est la première manifestation de la synchronisation des séquences d'étalement produites par le générateur 3, avec celles incluses dans le signal reçu RF. Dans le comparateur de tension 26, l'amplitude du signal intégré SI sortant de l'intégrateur 25 est comparée à un seuil de tension prédéterminé SE. Lorsque SI > SE, un signal logique de comparaison SC sortant du comparateur 26 bascule de l'état typiquement "1" à l'état "0", et indique que la synchronisation des séquences est acquise, tout au moins par rapport à la durée d'intégration dans l'intégrateur 25, et sans prendre en compte d'autres critères que l'on verra dans la suite.

Le contrôleur 4 commande l'intégrateur 25 en actionnant un commutateur dans celui-ci afin de modifier la durée d'intégration, commande le circuit de décalage 31 afin d'arrêter brièvement l'établissement du signal d'horloge à FS=4 MHz dans le générateur 3 et ainsi "décaler" d'un demi-bit la séquence locale SL par rapport à la séquence reçue SQ, et enfin commande le potentiomètre numérique 51 en fournissant une valeur numérique de position du curseur de potentiomètre correspondant à une tension analogique de commande de l'oscillateur 5. Ces différentes commandes du contrôleur sont transmises via le bus 41.

Avant de décrire le procédé de recherche de la phase de la séquence pseudoaléatoire reçue et de la valeur de la fréquence porteuse, on rappelle tout d'abord le déroulement d'une **étape d'intégration** de séquence pour une valeur déterminée de la fréquence locale FL et un décalage déterminé de la séquence de signal local SL par rapport à la séquence de signal reçu.

A la suite d'un décalage temporel déterminé, typiquement d'un demi-bit, le contrôleur 4 temporise pendant une attente de 42 us pour permettre au signal SF sortant du filtre passe-bande 23 de se stabiliser. Pendant ce laps de temps, une capacité interne à l'intégrateur 25 est shuntée par un commutateur CMOS commandé par le contrôleur. Puis le contrôleur 4 ouvre le commutateur CMOS pendant une première durée prédéterminée T1, aussi proche que possible de la période de la séquence, soit $T1 \cong 32$ us pour une longueur de séquence de 127 bits. L'intégrateur 25 intègre donc le signal filtré et redressé, et à la fin de cette première durée T1, le contrôleur 4 lit l'état du signal logique SC à la sortie du comparateur 26.

Si SE > SI, c'est-à-dire si le signal SC est à l'état défavorable "1", le contrôleur 4 remet à zéro l'intégrateur 25, et passe à l'étape suivante qui peut consister en un nouveau décalage temporel d'un demi-bit de la séquence locale.

Si le signal logique SC à la sortie du comparateur 26 est à l'état favorable "0", le contrôleur 4 procède à une seconde intégration pendant une durée T2 égale à un nombre entier K de fois la première durée T1, soit T2=K.T1 avec X typiquement égal à 10 et correspondant à T2=320 us. Une nouvelle comparaison du signal intégré SI à un second seuil supérieur au premier seuil SE, ou égal à SE selon cette réalisation, et donc une nouvelle lecture de la sortie du comparateur 26 permet au contrôleur 4 de décider définitivement si la phase testée de séquence est sensiblement égale à celle de la séquence dans le signal reçu RF à un demi-bit près.

Lorsque SC="0" après la durée T1 et SC="1" après la durée T2=K.T1, la sortie du comparateur 26 est à l'état défavorable "1", à l'issue de la seconde intégration de durée T2. Ce résultat peut être interprété comme une "fausse alarme" due à un pic de bruit ou à une intercorrélation dans le signal reçu. La phase testée de séquence est rejetée, et le contrôleur 4 passe à l'étape suivante.

Par contre, lorsque la sortie du comparateur 26 est à nouveau à l'état SC="0", à la suite de la seconde intégration, la synchronisation des séquences est déclarée acquise. Comme on le verra dans la suite, une exploration grossière en fréquence est arrêtée et la phase de la séquence locale est conservée, et le contrôleur passe à des étapes de définition plus précises de la valeur de la porteuse.

L'étape de double intégration décrite ci-dessus est une étape élémentaire reproduite de nombreuses fois au cours de la recherche de synchronisation de séquence et de la valeur de la porteuse dont le programme est préenregistré dans le contrôleur 4. Ce programme comporte essentiellement trois étapes principales relatives à une recherche de synchronisation des séquences locale et reçue et à une évaluation grossière de la porteuse reçue, puis à un centrage approximatif de la fréquence locale FL dans la bande de filtrage DFIL, et enfin à une recherche fine de la valeur de la porteuse reçue. De préférence, la seconde étape intermédiaire est incluse dans le programme du contrôleur 4, bien qu'elle puisse être supprimée dans une variante plus simple du procédé selon l'invention.

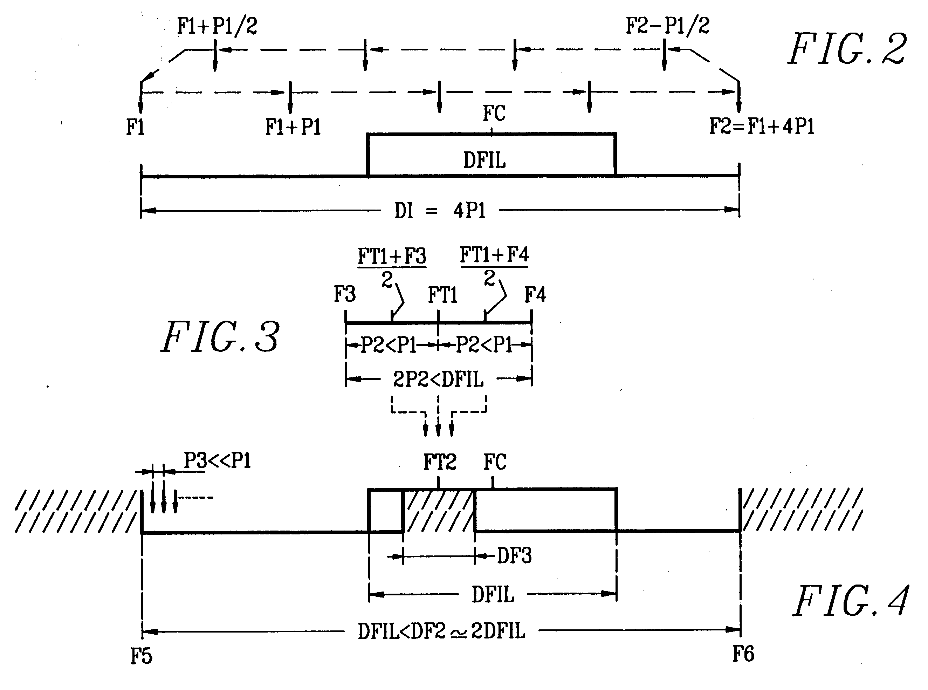

Dès la mise sous tension du dispositif 1, la **première étape** est entreprise par le contrôleur 4. La fréquence locale FL de l'oscillateur 5 est calée sur la fréquence limite inférieure, qui est théoriquement 69545-(140/2)=69475 kHz, du domaine d'incertitude de la fréquence porteuse, ayant une largeur DI supposée égale ici à 140 kHz et qui correspond à la fréquence intermédiaire F1=455-70=385 kHz. Les graphes des Figs. 2 à 4 sont relatifs à la fréquence intermédiaire FI, bien que la fréquence locale FL puisse être déduite par translation.

La première étape consiste en un balayage par valeurs discrètes de fréquence du domaine DI. Ces valeurs discrètes sont réunies en des suites arithmétiques successives dans lesquelles une valeur discrète de fréquence est déduite de la précédente par addition ou soustraction d'un premier pas de fréquence P1 < DFIL, typiquement égal à DI/N1, où N1 est un nombre entier typiquement égal à 4, soit P1=35 kHz comme montré à la Fig. 2. Les suites successives sont entrelacées deux-à-deux et alternativement croissantes et décroissantes. Ainsi, la première suite comprend les fréquences successives F1, F1+P1, F1+2(P1), F1+3(P1) et F1+4 (P1) = F1+DI, où F2=F1+DI est la fréquence limite supérieure du domaine d'incertitude DI. Puis la seconde suite comprend les fréquences successives F2-P1/2, F2-3.P1/2, F2-5.P1/2 et F2-7.P1/2.

Puis le balayage reprend à F1 suivant la première suite décrite ci-dessus.

A chaque valeur discrète de la fréquence locale FL ainsi sélectionnée par variation discrète de la résistance du potentiomètre 51, le contrôleur 4 procède au plus 2L étapes d'intégration qui correspondent à 2L décalages temporels successifs d'un demi-bit de la séquence locale SL. Tant que la première ou la seconde intégration est défavorable, la fin de chaque étape d'intégration est poursuivie par la suivante correspondant à un nouveau décalage d'un demi-bit dans le circuit 31. Lorsque les 2L décalages successifs ont été défavorables, avec SC="1", le contrôleur 4 passe au prochain pas de fréquence selon les suites définies ci-dessus.

Dès que l'état du signal de comparaison SC passe à l'état favorable "0" à la suite d'une seconde intégration de durée T2, les décalages temporels d'un demi-bit de séquence cessent, et le contrôleur 4 déclare acquise la synchronisation des séquences pseudoaléatoires d'étalement de spectre. Le contrôleur 4 enregistre la valeur courante trouvée de la fréquence FL, soit la fréquence intermédiaire FT1 correspondante, et plus précisément en pratique, la position du curseur du potentiomètre 51. Le contrôleur 4 passe alors à la seconde étape du programme, et le décalage temporel trouvé, c'est-à-dire la phase de la séquence locale SL, est conservé.

Cette **seconde étape** consiste à "recentrer" approximativement la fréquence trouvée FT1 dans la bande de filtrage DFIL=60 kHz. Pour cela, le contrôleur 4 positionne successivement le potentiomètre numérique 51 à deux fréquences locales FL de l'oscillateur 5 correspondant à des fréquences intermédiaires F3 et F4, telle que F3=FT1-P2 et F4=FT1+P2 avec P2<P1 et 2P2<DFIL, soit par exemple P2≅DFIL/3≅2.P1/3≅22 kHz, comme montré à la Fig. 3. Pour chacune des fréquences F3 et F4, une étape élémentaire d'intégration est accomplie. Si seulement l'une des étapes élémentaires avec les fréquences respectives F3 et F4 a produit une double intégration favorable, c'est-à-dire SI > SE et SC="0" après la durée T2, alors le contrôleur 4 cale l'oscillateur 5 à une fréquence locale correspondant à la moyenne entre FT1 et la fréquence retenue F3 ou F4, soit FT2=FT1±P2/2, c'est-à-dire FT2=(FT1+F3)/2 ou FT2=(FT1+F4)/2 ; la seconde fréquence trouvée FT2 est alors plus proche de la fréquence centrale FC de la bande de filtrage DFIL, que la fréquence FT1. Si les deux étapes élémentaires donnent une double intégration favorable, la fréquence locale précédente à la fin de la première étape, demeure inchangée, soit FT2 ≡ FT1 ; la fréquence FT1 est donc proche de la fréquence centrale FC.

La **troisième et dernière étape** consiste à affiner la valeur recherchée de la fréquence porteuse reçue par rapport à la valeur FT2. Cet affinement résulte d'un balayage discret à faible pas P3 << P1 d'une plage de fréquence centrée sur la valeur FT2 et ayant une largeur DF2 supérieure à DFIL. La bande DF2 n'est pas trop étendue dans la mesure où l'on sait a priori que FT2 est quasiment dans la partie centrale de la bande DFIL et qu'au delà d'une certaine largeur, le résultat de la vérification de la synchronisation de séquence est assurément mauvaise, le bruit devenant dominant dans le signal reçu RF. Typiquement, selon la Fig. 4, la largeur DF2 est égale à 2.DFIL=120 kHz.

De préférence, une petite plage de fréquence DF3 centrée sur la fréquence FT2 est exclue du balayage discret à faible pas P3 afin de minimiser les erreurs ; ceci équivaut à supposer que toute vérification de synchronisation faite à l'intérieur de la bande DF3 donne certainement un résultat favorable, SC="0" après la durée T2, et il est donc inutile d'effectuer cette vérification afin d'écourter la troisième étape.

Typiquement, DF3 est inférieure à DFIL/2, par exemple égale à P2=22 kHz, et P3 est égale à 1,7 kHz environ, ce qui correspond à N2=(DF2-DF3)/P3≅58 étapes élémentaires d'intégration effectuées successivement, par exemple à partir de F5=FT2-DF2/2 jusqu'à FT2-DF3/2, puis de FT2+DF3/2 jusqu'à F6=FT2+DF2/2.

Au début de la troisième étape, le contrôleur 4 met à zéro deux registres internes, tels que compteurs. A chaque étape élémentaire d'intégration favorable, un premier de ces registres est incrémenté du rang du pas P3, en supposant par exemple que le rang de l'étape à la fréquence F5 est égal à 1 et le rang à l'étape correspondant à la fréquence F6=FT2+DF2/2 est égal à N2+N3, où N3≅DF3/P3 est le nombre de pas P3 dans la bande interdite DF3. Simultanément, le second registre est incrémenté d'une unité en réponse à chaque étape élémentaire d'intégration favorable.

A la fin de la troisième étape, après accomplissement des N3 étapes élémentaires, la valeur de la fréquence porteuse reçue FP est estimée à une valeur de fréquence locale FLE qui correspond à une fréquence intermédiaire FIE très proche de la fréquence centrale FC et sélectionnée par le rang moyen RM suivant, calculé par le contrôleur 4 :

$$RM = \Sigma/\sigma$$

où

$\Sigma$ = somme des rangs des étapes favorables,

$\sigma$ = nombre d'étapes favorables

soit

$$FIE = F5 + (P3.\Sigma)/\sigma.$$

Le contrôleur 4 règle alors le potentiomètre 51 pour la valeur de fréquence locale FLE.

Les avantages du procédé selon l'invention sont nombreux. On peut citer les suivants.

La technique de recherche de synchronisation selon l'invention résout le problème des temps de réaction et de stabilisation des circuits 22 à 26 impliqués dans la recherche. En effet, après chaque variation discrète de la fréquence FL de l'oscillateur 5, il suffit au contrôleur 4 d'attendre quelques microsecondes que les sorties de ces circuits se soient stabilisées avant de lancer une recherche de synchronisation des séquences.

Par ailleurs, le procédé selon l'invention accélère la recherche, en ce sens que le procédé se contente de sonder le domaine d'incertitude de fréquence porteuse DI en quelques points F1, F1+P1,... espacés par le pas de décalage. Il est inutile d'explorer la totalité du domaine d'incertitude DI. Il suffit de faire des tests judicieusement répartis de sorte que, en général, trois ou quatre valeurs de fréquence adjacentes seulement, telles que F1+2. P1, F1+3.P1, F2-3.P1/2, F2-5.P1/2 soient susceptibles d'être incluses dans la bande DFIL du filtre 23.

Les deux indéterminations initiales sont donc levées simultanément et d'une façon complémentaire : c'est l'approche de la valeur de la fréquence porteuse reçue qui permet de synchroniser les séquences d'étalement et c'est l'état de synchronisation des séquences qui permet d'affiner le réglage des circuits dans le dispositif 1 vis-à-vis de cette fréquence porteuse.

Un composant essentiel concourant à la recherche de synchronisation est le potentiomètre numérique 51 qui permet d'appliquer à l'oscillateur 5 des variations de fréquence discrètes et calibrées ; de plus, ces variations sont parfaitement contrôlables par le contrôleur 4 puisqu'à chaque pas de fréquence correspond un nombre, dit rang, dans les registres du contrôleur.

Il faut aussi noter que la fiabilité du procédé selon l'invention ne dépend absolument pas des valeurs numériques mentionnées pour les fréquences des oscillateurs, la largeur de bande DFIL du filtre 23, les pas d'exploration en fréquence P1 à P3, les différentes plages de fréquence définies ci-dessus DI, DF2 et DF3, ou le nombre de positions du curseur du potentiomètre numérique 51. Lesdites valeurs numériques sont propres au modem pour lequel le procédé a été mis au point selon une réalisation préférée.

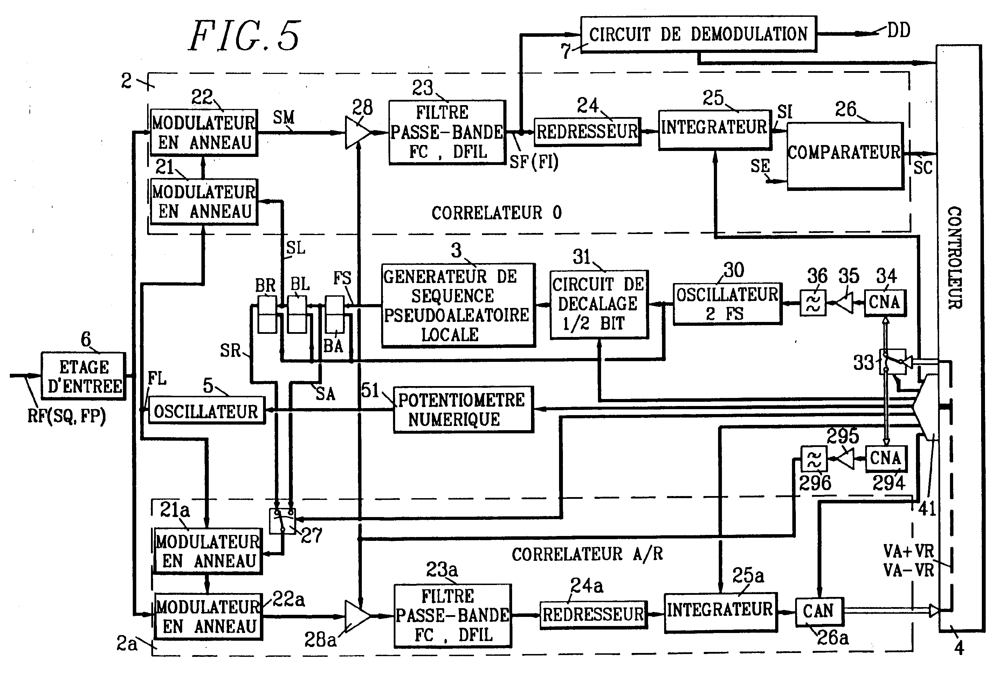

En se référant maintenant à la Fig. 5, on retrouve les circuits montrés dans la Fig. 1, mais inclus dans un démodulateur de modem. Ce démodulateur comprend en entrée deux voies parallèles matérialisées par le corrélateur de séquence 2 déjà décrit et un autre corrélateur Avance/Retard 2a. Le premier corrélateur 2 est appelé "corrélateur 0" pour indiquer que la séquence locale dans ce corrélateur ne subit aucun retard lorsque les séquences reçue SQ et locale SL sont en phase. Au contraire dans le second corrélateur 2a, deux séquences locales SA et SR corrélées à la séquence reçue SQ ont respectivement subi une avance et un retard d'un demi-bit par rapport à la séquence locale en phase SL dans le corrélateur 2, et donc par rapport à la séquence reçue SQ lorsque celle-ci est en phase avec la séquence SL. Les trois séquences locales SL, SA et SR, qui sont respectivement en phase, en avance et en retard d'un demi-bit par rapport à la séquence SQ dans le signal reçu RF lors de la synchronisation, sont fournies par des sorties de trois bascules D, BA, BL et BR, reliées en série à la sortie du générateur de séquence pseudoaléatoire 3 et rythmées par le signal à fréquence 2FS sortant de l'oscillateur 30.

Le second corrélateur comprend un commutateur 27 commandé par le contrôleur 4, via le bus 41, pour sélectionner l'une des sorties des bascules BA et BR produisant les séquences SA et SR. La sortie de la bascule BL produisant la séquence SL est reliée à la première entrée du modulateur en anneau 21 dans le corrélateur 2.

Le corrélateur 2a comprend, comme le corrélateur 2, un premier modulateur en anneau 21a ayant une seconde entrée reliée à la sortie de l'oscillateur à fréquence locale 5, un second modulateur en anneau 22a ayant des entrées reliées respectivement aux sorties de l'étage d'entrée 6 et du modulateur 21a, ainsi qu'un filtre passe-bande 23a identique au filtre 23, un redresseur à double alternance 24a, un intégrateur 25a et un convertisseur analogique-numérique 26a qui sont reliés en série à la sortie du modulateur 22a. Le contrôleur 4 commande la durée d'intégration dans l'intégrateur 25a et la lecture d'échantillon dans le convertisseur 26a, via des fils du bus 41.

Le second corrélateur 2a est utilisé pour entretenir la synchronisation après l'acquisition de celle-ci, ici selon le procédé de l'invention décrit en détail ci-dessus. L'entretien de la synchronisation est réalisé par une boucle d'asservissement entre le corrélateur 2a et principalement des commandes qui sont appliquées à l'oscillateur à fréquence locale 5, via le potentiomètre 51, et à l'autre oscillateur 30 à fréquence 2FS. En pratique, l'oscillateur 30 est un oscillateur commandé en tension à travers un circuit de commutation 33, un convertisseur numérique-analogique 34, un amplificateur suiveur 35 et un filtre passe-bas 36. Le convertisseur 34 et le filtre 36 sont mis hors service par le contrôleur 4 pendant la recherche de synchronisation de séquence et de fréquence de porteuse ; à cet égard, des contacts mobiles du circuit de commutation 33 sont appliqués contre des premiers contacts de sortie du circuit de commutation reliés aux entrées numériques du convertisseur 34 sous la commande du contrôleur 4. D'autres signaux de commande peuvent également intervenir dans l'asservissement de la synchronisation, par exemple un signal délivré par un filtre inclus dans un circuit déphaseur du circuit de démodulation 7 proprement dit qui est relié à la sortie du filtre 23 et qui transmet classiquement le signal de données au débit DD, convenablement remis en forme.

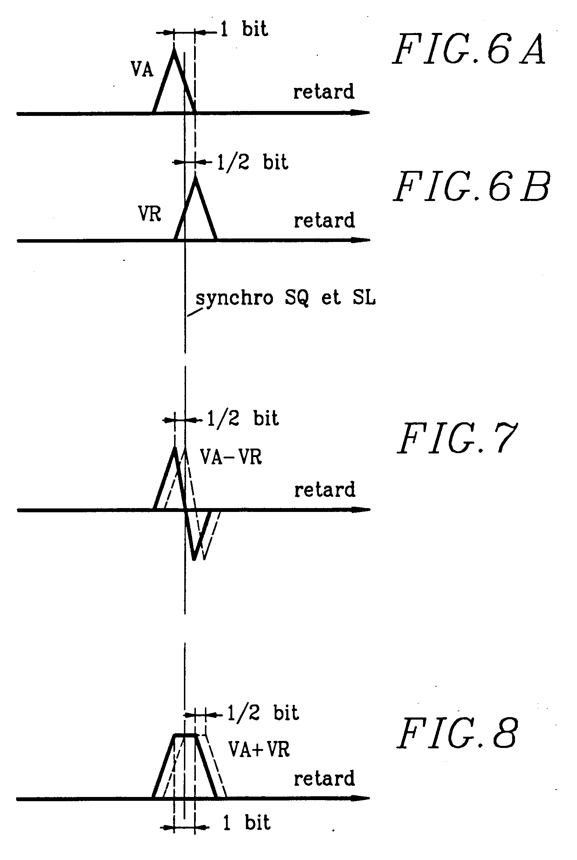

Brièvement, le procédé d'asservissement de la synchronisation est le suivant. Le contrôleur 4 commande alternativement le commutateur 27 dont la sortie est reliée à la première entrée du modulateur 21a, afin que la séquence reçue SQ dans le signal à fréquence intermédiaire FI soit corrélée aux séquences SA et SR. Après deux intégrations de 2ms environ, chacune dans l'intégrateur 25a, deux signaux numériques de tension "en avance et retard" VA et VR sortant du convertisseur 26a sont soustraits dans le contrôleur 4. Comme montré aux Figs. 6A et 6B, les amplitudes des signaux VA et VR sont variables en fonction de l'avance de la séquence SA et du retard de la séquence SR par rapport à la séquence reçue SQ et sont maximales respectivement lorsque les séquences SA et SR sont synchrones avec la séquence SQ. En fonction de la différence VA-VR calculée par le contrôleur 4, comme montré à la Fig. 7, sont établis des signaux de correction particulièrement pour l'oscillateur 30 afin de rattraper des dérives par rapport à la synchronisation exacte.

Les deux corrélateurs 2 et 2a comprennent classiquement des amplificateurs non représentés, et également des amplificateurs à gain variable 28 et 28a dont le gain est commandé par le contrôleur 4. Le rôle des amplificateurs 28 et 28a est de maintenir un niveau de signal optimum non seulement à l'entrée du circuit de démodulation 7 mais également en sortie des intégrateurs 25 et 25a. En particulier, le signal SI en sortie de l'intégrateur 25 ne doit dépasser le seuil SE qu'au moment de la synchronisation. Le niveau optimum de signal est donc fonction de la synchronisation des séquences dans le démodulateur.

Selon la technique antérieure, des signaux de commande automatique de gain (CAG) des amplificateurs 28 et 28a sont établis en fonction du signal en sortie de l'intégrateur 25. Ceci exige le recours à un détecteur de puissance, tel que le redresseur 24 fournissant l'enveloppe du signal filtré.

La technique antérieure a pour inconvénient que le gain dépend, d'une manière non négligeable, de la synchronisation à beaucoup mieux qu'un demi-bit près et donc de l'asservissement de la synchronisation. Comme montré dans la Fig. 6A ou 6B, par exemple lorsque la séquence locale SL est sensiblement désynchronisée avec la séquence reçue SQ, en retard ou en avance d'un demi-bit, l'information de puissance reçue est grandement erronée, indiquant une puissance nulle, ce qui augmenterait de manière prohibitive le gain des amplificateurs de réception 28 et 28a.

Selon l'invention, le contrôleur 4 calcule également la somme des signaux de tension VA+VR, comme montré à la Fig. 8, pour commander le gain des amplificateurs 28 et 28a en fonction de cette somme.

Selon la réalisation illustrée à la Fig. 5, le gain des amplificateurs 28 et 28a est commandé par le contrôleur 4 pendant l'entretien de la synchronisation, lorsque des contacts mobiles du circuit de commutation 33 sont appliqués contre des seconds contacts de sortie du circuit 33. Les seconds contacts sont reliés à des entrées de commande en gain des amplificateurs 28 et 28a, à travers une autre combinaison série comprenant un convertisseur numérique-analogique 294, un amplificateur suiveur 295 et un filtre passe-bas 296. Le convertisseur 34, ou le filtre 36 maintient une tension de commande de l'oscillateur 30 pendant l'entretien de la synchronisation, bien que selon d'autres variantes, cette tension de commande puisse être modifiée à volonté par le contrôleur 4 par suppression du circuit de commutation 33 et par liaisons directes des convertisseurs 34 et 294 au contrôleur.

Comme montré en trait pointillé dans la Fig. 8, une variation de plus, ou moins, un demi-bit de la phase de la séquence SL par rapport à la séquence reçue SQ dans le signal RF n'influe pas sur l'amplitude du signal VA+VR. En pratique, l'écart entre le signal de somme VA+VR et un seuil prédéterminé dans le contrôleur 4 détermine directement le gain dans les amplificateurs 28 et 28a. Ce gain est donc quasiment constant pendant la phase d'asservissement de la synchronisation et la phase d'utilisation normale du démodulateur, tant que les corrections de décalage n'excèdent pas plus ou moins un demi-bit de séquence.

Par ailleurs, le seuil de comparaison SE dans le comparateur 26 est alors choisi en fonction du bruit dans la liaison entre le modulateur et le démodulateur, mesurable à l'aide du corrélateur 2a, lors de la phase d'acquisition, aux moments où il n'y a aucune synchronisation entre le modulateur et le démodulateur.

## Revendications

1. Procédé de recherche de synchronisation et de fréquence d'une porteuse afin de démoduler un signal reçu (RF) résultant de la modulation en phase par un signal de données, d'une séquence pseudoaléatoire numérique (SR) modulant en phase ladite porteuse (FP), et ayant une longueur de L bits,

   procédé selon lequel un signal local ayant une fréquence locale (FL) voisine de la fréquence de ladite porteuse (FP) est modulé en phase par une séquence pseudoaléatoire numérique locale (SL) identique à la séquence (SQ) dans le signal reçu (RF) et est mélangé audit signal reçu en un signal mélangé à fréquence intermédiaire (SM), et ledit signal mélangé est filtré dans une bande de fréquence de filtrage (DFIL) centrée sur une fréquence intermédiaire prédéterminée (FC) et ayant une largeur prédéterminée en un signal filtré (SF), et

   procédé qui comprend une étape d'intégration consistant à intégrer le signal filtré (SF) en un signal intégré (SI) pendant au moins une durée prédéterminée (T1, T2) et à comparer le signal filtré à au moins un seuil prédéterminé (SE), pour une valeur déterminée de la fréquence locale (FL) et un décalage déterminé de la séquence locale (SL) par rapport à la séquence de signal reçu (SQ),

   caractérisé en ce qu'il comprend
   - plusieurs séries successives d'étape d'intégration respectivement pour des premières valeurs discrètes prédéterminées de la fréquence locale (FL) correspondant à des premières fréquences intermédiaires (F1, F1+P1,...) sensiblement équiréparties dans une bande (DI) incluant largement la bande de filtrage (DFIL), chaque série d'étape comprenant au moins 2L étapes d'intégration correspondant à 2L décalages temporels successifs d'un demi-bit de la séquence locale respectivement, et la variation discrète de la fréquence locale (FL) et le décalage d'un demi-bit de la séquence locale (SL) cessant à une première fréquence intermédiaire trouvée (FT1) et à un décalage temporel trouvé dès que le signal intégré (SI) excède ledit seuil prédéterminé (SE), et

- un nombre prédéterminé de dernières étapes d'intégration pour lesquelles la séquence locale (SL) ne subit aucun décalage temporel et pendant lesquelles la fréquence locale (FL) est estimée respectivement à des secondes valeurs discrètes respectives qui sont déduites l'une de l'autre d'un second pas de fréquence (P3) inférieur à l'écart (P1) entre deux premières fréquences intermédiaires successives et qui correspondent à des fréquences intermédiaires comprises dans une seconde bande de fréquence (DF2) centrée sur ladite première fréquence trouvée (FT1) et plus large que la bande de filtrage (DFIL), chacune des dernières étapes à la fin de laquelle ledit signal intégré (SI) excède ledit seuil (SE) étant déclaré favorable (SC="0"), et

- le calcul d'un paramètre (RM) variant linéairement avec la fréquence moyenne (FLE) des fréquences locales qui correspondent respectivement aux dernières étapes favorables afin de caler le signal local (SL) à ladite fréquence moyenne.

2. Procédé conforme à la revendication 1, caractérisé en ce que les premières fréquences intermédiaires constituent deux suites arithmétiques successives ayant chacune un même premier pas (P1) et entrelacées deux à deux avec un décalage d'un demi premier pas (P1/2).

3. Procédé conforme à la revendication 2, caractérisé en ce que les premières fréquences intermédiaires (F1 à F2) sont comprises dans une bande de fréquence (DI) sensiblement égale au double de la bande de filtrage (DFIL).

4. Procédé conforme à l'une quelconque des revendications 1 à 3, caractérisé en ce qu'il comprend, après lesdites plusieurs séries successives d'étape d'intégration et avant lesdites dernières étapes d'intégration, un centrage de la fréquence intermédiaire (FI) par variation discrète de ladite fréquence locale (FL) et par rapport à la fréquence centrale (FC) de ladite bande de filtrage (DFIL), sans décalage temporel de séquence,

ledit centrage de fréquence consistant

à effectuer successivement deux étapes d'intégration pour des troisième et quatrième fréquences (F3, F4) dont la moyenne est sensiblement égale à la première fréquence trouvée (FT1) et dont la différence (2P2) est inférieure à la largeur (DFIL) de la bande de filtrage, et

à remplacer la première fréquence trouvée (FT1), en tant que fréquence centrale de la seconde bande de fréquence (DF2), par une seconde fréquence trouvée (FT2) égale à la moyenne des fréquences incluant la première fréquence trouvée (FT1) et lesdites troisième et quatrième fréquences (F3, F4) et ayant donné lieu à un signal intégré (SI) excédant ledit seuil (SE).

5. Procédé conforme à la revendication 4, caractérisé en ce que la différence entre la première fréquence trouvée (FT1) et les troisième et quatrième fréquences (F3, F4) est inférieure à l'écart (P1) entre deux premières fréquences intermédiaires successives (F1, F1+P1,...), et de préférence, est sensiblement égale au tiers de la largeur de la bande de filtrage (DFIL).

6. Procédé conforme à l'une quelconque des revendications 1 à 5, caractérisé en ce que la seconde bande de fréquence (DF2) ne comporte pas une petite bande de fréquence (DF3) centrée sur ladite première fréquence trouvée (FT1), ladite petite bande de fréquence ayant de préférence une largeur inférieure à la moitié de la largeur de la bande de filtrage (DFIL).

7. Procédé conforme à l'une quelconque des revendications 1 à 6, caractérisé en ce que la largeur de la seconde bande de fréquence (DF2) est plus grande que la largeur de la bande de filtrage (DFIL) et est de préférence sensiblement égale au double de la largeur de la bande de filtrage.

8. Dispositif pour la mise en oeuvre du procédé conforme à l'une quelconque des revendications 1 à 7, comprenant des moyens (5) pour produire un signal à fréquence locale prédéterminée (FL), des moyens (30, 31, 3) pour générer une séquence pseudoaléatoire numérique locale (SL), et un premier corrélateur (2), ledit corrélateur comprenant des premiers moyens de modulation (21) pour moduler en phase le signal à fréquence locale (FL) par la séquence locale (SL) en un signal modulé, des seconds moyens de modulation (22) pour moduler en phase le signal reçu (RF) par le signal modulé en un signal mélangé (SM), des moyens pour filtrer le signal mélangé (SM) en le signal filtré (SF), des moyens (24, 25) pour intégrer le signal filtré en le signal intégré (SI), et des moyens (26) pour comparer le signal intégré (SI) au seuil prédéterminé (SE), ledit dispositif comprenant également des moyens de contrôle (4) pour modifier la durée d'intégration (T1, T2) dans les moyens pour intégrer (24, 25) et un décalage temporel de séquence locale dans les moyens pour générer (30, 31, 3) en fonction d'un signal de comparaison (SC) produit par les moyens pour comparer, caractérisé en ce qu'il comprend des moyens (51) commandés par les moyens de contrôle (4) pour modifier ladite fréquence locale (FL) dans les moyens pour produire (5) afin que la fréquence locale puisse être notamment égale auxdites premières valeurs discrètes prédéterminées (F1 à F2) et aux secondes valeurs discrètes (F5 à F6).

9. Dispositif conforme à la revendication 8, caractérisé en ce que les moyens pour modifier comprennent un potentiomètre numérique (51) commandé par les moyens de contrôle (4).

10. Démodulateur comprenant le dispositif conforme à la revendication 8 ou 9, et, en outre, un second corrélateur recevant ledit signal reçu (RF) et recevant alternativement, sous la commande desdits moyens de contrôle (4), deux séquences pseudoaléatoires (SA, SR) déduites de ladite séquence locale (SL) par une avance et un retard d'un demi-bit, pour produire alternativement deux signaux de corrélation (VA, VR) qui correspondent respectivement à la corrélation entre la séquence reçue (SQ) et la séquence en avance (SA) et à la corrélation entre la séquence reçue (SQ) et la séquence en retard (SR), lesdits corrélateurs (2, 2a) comprenant des amplificateurs à gain variable respectifs (28 et 28a) commandés par lesdits moyens de contrôle (4), caractérisé en ce que les gains des amplificateurs (28, 28a) sont fonction de la somme (VA + VR) desdits deux signaux de corrélation qui sont produits par le second corrélateur (2a).

**Patentansprüche**

1. Verfahren zur Feststellung der Synchronisation und Frequenz einer Trägerfrequenz zur Demodulation eines empfangenen Signals (RF), das aus der Phasenmodulation durch ein Datensignal, einer pseudozufälligen digitalen Folge (SR), welche die genannte Trägerfrequenz (FP) in der Phase moduliert, resultiert und eine Länge von L Bits hat,
Verfahren, dem zufolge ein lokales Signal mit einer lokalen Frequenz (FL), die der Frequenz der genannten Trägerfrequenz (FP) benachbart ist, in der Phase durch ein pseudozufälliges digitales lokales Signal (SL) moduliert wird, das mit der Folge (SQ) in dem empfangenen Signal (RF) identisch ist und mit dem genannten empfangenen Signal in ein gemischtes Signal mit Zwischenfrequenz (SM) gemischt wird, und wobei das genannte gemischte Signal in einem Filterfrequenzband (DFIL), das auf eine vorbestimmte Zwischenfrequenz (FC) zentriert wird und eine vorbestimmte Breite hat, in ein gefiltertes Signal (SF) gefiltert wird, und
Verfahren, das einen Integrationsschritt enthält, der besteht aus der Integration des gefilterten Signals (SF) in ein integriertes Signal (SI) während mindestens einer festgelegten Dauer (T1, T2) und aus dem Vergleich des gefilterten Signals mit mindestens einer vorbestimmten Schwelle (SE) für einen bestimmten Wert der lokalen Frequenz (FL) und aus einer festgelegten Verschiebung der lokalen Folge (SL) in bezug auf die Folge des empfangenen Signals (SQ),
dadurch gekennzeichnet, daß es besteht aus
- mehreren aufeinanderfolgenden Serien von Integrationsschritten jeweils für die ersten vorbestimmten diskreten Werte der lokalen Frequenz (FL), die ersten Zwischenfrequenzen (F1, F1+P1,...) entsprechen, die deutlich gleichmäßig über ein Band (DI) verteilt sind, das das Filterband (DFIL) bei weitem einschließt, wobei jede Serie von Schritten aus mindestens 2L Integrationsschritten besteht, die 2L zeitlichen aufeinanderfolgenden Verschiebungen der lokalen Folge um jeweils ein halbes Bit entsprechen, und der diskreten Abweichung der lokalen Frequenz (FL) und der Verschiebung der lokalen Frequenz (SL) um ein halbes Bit, die bei einer ersten festgestellten Zwischenfrequenz (FT1) und einer festgestellten zeitlichen Verschiebung endet, sobald das integrierte Signal (SI) die genannte vorbestimmte Schwelle (SE) überschreitet, und
- eine vorbestimmte Zahl von letzten Integrationsschritten, für welche die lokale Frequenz (SL) nicht zeitlich verschoben wird und während welcher die lokale Frequenz (FL) in bezug auf jeweilige zweite diskrete Werte bewertet wird, die jeweils aus einem zweiten Frequenzschritt (P3) abgeleitet werden, der kleiner als der Abstand (P1) zwischen zwei ersten aufeinanderfolgenden Zwischenfrequenzen ist und die den Zwischenfrequenzen entsprechen, die in einem zweiten Frequenzband (DF2) enthalten sind, das auf der genannten festgestellten ersten Frequenz (FT1) zentriert ist und breiter als das Filterband (DFIL) ist, wobei jeder der letzten Schritte, an dessen Ende das genannte integrierte Signal (SI) die genannte Schwelle (SE) überschreitet, für günstig erklärt wird (SC="0"), und

- die Berechnung eines Parameters (RM), der linear mit der durchschnittlichen Frequenz (FLE) der lokalen Frequenzen schwankt, die jeweils den letzten günstigen Schritten entsprechen, um das lokale Signal mit der genannten Durchschnittsfrequenz (SL) zu verbinden.

2. Verfahren nach Anspruch 1, dadurch gekennzeichnet, daß die ersten Zwischenfrequenzen zwei sukzessive arithmetische Folgen bilden, die jeweils einen gleichen ersten Schritt (P1) haben und mit einer Abweichung von einem halben ersten Schritt (P1/2) zu zweit verbunden sind.

3. Verfahren nach Anspruch 2, dadurch gekennzeichnet, daß die ersten Zwischenfrequenzen (F1 bis F2) in einem Frequenzband (DI) enthalten sind, das deutlich gleich oder doppelt so breit wie das Filterband (DFIL) ist.

4. Verfahren nach einem der Ansprüche 1 bis 3, dadurch gekennzeichnet, daß es nach den genannten verschiedenen aufeinanderfolgenden Serien von Integrationsschritten und vor den genannten letzten Integrationsschritten aus einer Zentrierung der Zwischenfrequenz (FI) durch diskrete Abweichung der genannten lokalen Frequenz (FL) und in bezug auf die Mittenfrequenz (FC) des genannten Filterbandes (DFIL), ohne zeitliche Verschiebung der Folge besteht,
wobei die genannte Zentrierung der Frequenz besteht aus
der nacheinander erfolgten Ausführung der beiden Integrationsschritte für die dritte und vierte Frequenz (F3, F4), deren Durchschnitt deutlich gleich der ersten festgestellten Frequenz (FT1) ist und deren Differenz (2P2) kleiner als die Breite (DFIL) des Filterbandes ist, und
dem Ersatz der ersten festgestellten Frequenz (FT1) als Mittenfrequenz des zweiten Frequenzbandes (DF2) durch eine zweite festgestellte Frequenz (FT2), die gleich dem Durchschnitt der Frequenzen ist und die erste festgestellte Frequenz (FT1) und die genannte dritte und vierte Frequenz (F3, F4) enthält und die zu einem integrierten Signal (SI) geführt hat, das die genannte Schwelle (SE) überschreitet.

5. Verfahren nach Anspruch 4, dadurch gekennzeichnet, daß die Differenz zwischen der ersten festgestellten Frequenz (FT1) und der dritten und vierten Frequenz (F3, F4) kleiner als der Abstand (P1) zwischen den beiden ersten aufeinanderfolgenden Zwischenfrequenzen (F1, F1+P1, ...) und vorzugsweise deutlich gleich dem Drittel der Breite des Filterbandes (DFIL) ist.

6. Verfahren nach einem der Ansprüche 1 bis 5, dadurch gekennzeichnet, daß das zweite Frequenzband (DF2) kein auf die genannte erste festgestellte Frequenz (FT1) zentriertes kleines Frequenzband (DF3) enthält, wobei das genannte kleine Frequenzband vorzugsweise ein Breite hat, die geringer als die Hälfte der Breite des Filterbandes (DFIL) ist.

7. Verfahren nach einem der Ansprüche 1 bis 6, dadurch gekennzeichnet, daß die Breite des zweiten Frequenzbandes (DF2) größer als die Breite des Filterbandes (DFIL) ist und vorzugsweise deutlich gleich oder doppelt so breit wie das Filterband ist.

8. Einrichtung zur Anwendung des Verfahrens nach einem beliebigen der Ansprüche 1 bis 7, dadurch gekennzeichnet, daß sie aus Vorrichtungen (5) zur Erzeugung eines Signals mit vorbestimmter lokaler Frequenz (FL), Vorrichtungen (30, 31, 3) zur Erzeugung einer pseudozufälligen lokalen digitalen Folge (SL), und einem ersten Korrelator (2) besteht, wobei der genannte Korrelator aus ersten Modulationsvorrichtungen (21) zur Phasenmodulation des Signals mit lokaler Frequenz (FL) durch die lokale Folge (SL) in ein moduliertes Signal, aus zweiten Modulationsvorrichtungen (22) zur Phasenmodulation des empfangenen Signals (RF) durch das modulierte Signal in ein gemischtes Signal (SM), aus Vorrichtungen zum Filtern des gemischten Signals (SM) in das gefilterte Signal (SF), aus Vorrichtungen (24, 25) zur Integration des gefilterten Signals in das integrierte Signal (SI), und aus Vorrichtungen (26) zum Vergleich des integrierten Signals (SI) mit der vorbestimmten Schwelle (SE), wobei die genannte Einrichtung ebenfalls besteht aus Kontrollvorrichtungen (4) zur Modifizierung der Integrationsdauer (T1, T2) in die Vorrichtungen zur Integration (24, 25) und eine zeitliche Verschiebung der lokalen Folge in den Vorrichtungen zur Erzeugung (30, 31, 3) in Abhängigkeit von einem Vergleichssignal (SC), das von den Vorrichtungen (51) zum Vergleichen erzeugt wird, dadurch gekennzeichnet, daß sie Vorrichtungen enthält, die von den Kontrollvorrichtungen (4) gesteuert werden, um die genannte lokale Frequenz (FL) in den Vorrichtungen zur Erzeugung (5) zu modifizieren, damit die lokale Frequenz insbesondere gleich den genannten ersten vorbestimmten diskreten Werten (F1 bis F2) und den zweiten diskreten Werten (F5 bis F6) sein kann.

9. Vorrichtung nach Anspruch 8, dadurch gekennzeichnet, daß die Vorrichtungen zur Modifizierung aus einem Digitalpotentiometer (51) bestehen, das durch die Kontrollvorrichtungen (4) gesteuert wird.

10. Demodulator, bestehend aus der Einrichtung nach Anspruch 8 oder 9 und ferner einem zweiten Korrelator, der das genannte empfangene Signal (RF) empfängt und alternativ, gesteuert von den genannten Kontrollvorrichtungen (4) zwei pseudozufällige Folgen (SA, SR) empfängt, die durch Voreilen und Verzögerung um ein halbes Bit von der genannten lokalen Frequenz (FL) abgeleitet werden, um alternativ zwei Korrelationssignale (VA, VR) zu erzeugen, die jeweils der Korrelation zwischen der empfangenen Folge (SQ) und der Folge mit Voreilen (SA) und der Korrelation zwischen der empfangenen Folge (SQ) und der Folge mit Verzögerung (SR) entsprechen, wobei die genannten Korrelatoren (2, 2a) jeweils Verstärker mit variabler Verstärkung (28, 28a) enthalten, die von den genannten Kontrollvorrichtungen (4) gesteuert werden, dadurch gekennzeichnet, daß die Verstärkungen der Verstärker (28, 28a) von der Summe (VA + VR) der beiden genannten Korrelationssignale abhängen, die vom zweiten Korrelator (2a) erzeugt werden.

## Claims

1. Method for searching for synchronization and frequency of a carrier in order to demodulate a received signal (RF) resulting from the phase modulation, of a digital pseudorandom sequence (SR) phase-modulating said carrier (FP) and having a length of L bits, by a data signal,

   method according to which a local signal having a local frequency (FL) close to the frequency of said carrier (FP) is phase-modulated by a local digital pseudorandom sequence (SL) identical to the sequence (SQ) in the received signal (RF) and is mixed with said received signal into a mixed signal with intermediary frequency (SM), and said mixed signal is filtered in a filtering frequency band (DFIL) centered on a predetermined intermediary frequency (FC) and having a predetermined width into a filtered signal (SF), and

   method comprising an integration step consisting in integrating the filtered signal (SF) into an integrated signal (SI) during at least a predetermined period (T1, T2) and in comparing the filtered signal with at least one predetermined threshold (SE), for a determined value of the local frequency (FL) and a determined shifting of the local sequence (SL) with regard to the sequence of received signal (SQ),

   characterized in that it comprises
   - plural successive series of integration steps respectively for first predetermined discrete values of the local frequency (FL) corresponding to first intermediary frequencies (F1, F1+P1, ...) substantially equidistributed in a band (DI) widely including the filtering band (DFIL), each series of step comprising at least 2L integration steps corresponding to 2L successive half-bit time shifts of the local sequence respectively, and the discrete variation of the local frequency (FL) and the half-bit shifting of the local sequence (SL) ceasing at a first found intermediary frequency (FT1) and at a found time shift as soon as the integrated signal (SI) exceeds said predetermined threshold (SE), and
   - last integration steps in a predetermined number for which the local sequence (SL) does not undergo any time shift and during which the local frequency (FL) is respectively estimated at second respective discrete values which are deducted from one another from a second frequency stepping increment (P3) lower than the difference (P1) between two first successive intermediary frequencies and which correspond to intermediary frequencies included in a second frequency band (DF2) centered on said first found frequency (FT1) and wider than the filtering band (DFIL), each of the last steps at the end of which said integrated signal (SI) exceeds said threshold (SE) being declared favourable (SC="0"), and
   - the calculation of a parameter (RM) varying linearly with the average frequency (FLE) of the local frequencies which respectively correspond to the last favourable steps thereby setting the local signal (SC) at said average frequency.

2. Method according to claim 1, characterized in that the first intermediary frequencies constitute two successive arithmetic series each having a same first stepping increment (P1) and interlaced two-by-two with a shift of a half first stepping increment (P1/2).

3. Method according to claim 2, characterized in that the first intermediary frequencies (F1 to F2) are included in a frequency band (DI) substantially equal to twice the filtering band (DFIL).

4. Method according to any one of claims 1 to 3, characterized in that it comprises, after said plural successive series of integration step and before said last integration steps, a centering of the intermediary frequency (FI) by means of a discrete variation of said local frequency (FL) and with regard to the center frequency (FC) of said filtering band (DFIL), without sequence time shift,

said frequency centering consisting in

successively carrying out two integration steps for third and fourth frequencies (F3, F4) of which the average is substantially equal to the first found frequency (FT1) and of which the difference (2P2) is less than the width (DFIL) of the filtering band, and

replacing the first found frequency (FT1), as center frequency of the second frequency band (DF2), by a second found frequency (FT2) equal to the average of the frequencies including the first found frequency (FT1) and said third and fourth frequencies (F3, F4) and having produced an integrated signal (SI) exceeding said threshold (SE).

5. Method according to claim 4, characterized in that the difference between the first found frequency (FT1) and the third and fourth frequencies (F3, F4) is smaller than the difference (P1) between two first successive intermediary frequencies (F1, F1+P1, ...) and preferably is substantially equal to the third of the width of the filtering band (DFIL).

6. Method according to any one of claims 1 to 5, characterized in that the second frequency band (DF2) does not comprise a short frequency band (DF3) centered on said first found frequency (FT1), said short frequency band having preferably a width less than half the width of the filtering band (DFIL).

7. Method according to any one of claims 1 to 6, characterized in that the width of the second frequency band (DF2) is greater than the width of the filtering band (DFIL) and is preferably substantially equal to twice the width of the filtering band.

8. Device for the implementing of the method according to any one of claims 1 to 7, comprising means (5) for deriving a signal at predetermined local frequency (FL), means (30, 31, 3) for generating a local digital pseudorandom sequence (SL) and a first correlator (2), said correlator comprising first modulation means (21) for phase-modulating the local frequency signal (FL) by the local sequence (SL) into a modulated signal, second modulation means (22) for phase-modulating the received signal (RF) by the modulated signal into a mixed signal (SM), means for filtering the mixed signal (SM) in the filtered signal (SF), means (24, 25) for integrating the filtered signal into the integrated signal (SI), and means (26) for comparing the integrated signal (SI) with the predetermined threshold (SE), said device further comprising control means (4) for modifying the integration period (T1, T2) in the integrating means (24, 25) and a local sequence time shift in the generating means (30, 31, 3) as a function of a comparison signal (SC) derived by the comparing means, characterized in that it comprises means (51) controlled by the control means (4) for modifying said local frequency (FL) in the deriving means (5) to enable the local frequency to be notably equal to said predetermined first discrete values (F1 to F2) and to the second discrete values (F5 to F6).

9. Device according to claim 8, characterized in that the modifying means comprise a digital potentiometer (51) controlled by the control means (4).

10. Demodulator comprising the device according to claim 8 or 9 and also a second correlator receiving said received signal (RF) and receiving alternately, under the control of said control means (4), two pseudorandom sequences (SA, SR) deducted from said local sequence (SL) by an advance and a delay of one half-bit for alternately deriving two correlation signals (VA, VR) which respectively correspond to the correlation between the received sequence (SQ) and the advanced sequence (SA) and to the correlation between the received sequence (SQ) and the delayed sequence (SR), said correlators (2, 2a) comprising respective variable gain amplifiers (28 and 28a) controlled by said control means (4), characterized in that the gains of the amplifiers (28, 28a) are as a function of the sum (VA + VR) of said two correlation signals which are derived by the second correlator (2a).

# FIG.1

ETAGE D'ENTREE **6**

RF(SQ) FP≈70MHz

MODULATEUR EN ANNEAU **22** — SM

FILTRE PASSE-BANDE FC . DFIL **23** — SF (FI=FP−FL)

REDRESSEUR **24**

INTEGRATEUR T1 T2=K.T1 **25** — SI

COMPARATEUR **26** — SC

SE

SI>SE 1 0

CORRELATEUR **2**

MODULATEUR EN ANNEAU **21**

SL

GENERATEUR DE SEQUENCE PSEUDOALEATOIRE LOCALE **3** — FS

CIRCUIT DE DECALAGE 1/2 BIT **31**

OSCILLATEUR 2 FS **30**

CONTROLEUR **4**

41

FL

OSCILLATEUR **5**

POTENTIOMETRE NUMERIQUE **51**

**1**

EP 0 428 444 B1

EP 0 428 444 B1

*FIG.2*

$F1+P1/2$      $F2-P1/2$

$F1$    $F1+P1$    FC    $F2=F1+4P1$

DFIL

$DI = 4P1$

*FIG.3*

$\dfrac{FT1+F3}{2}$    $\dfrac{FT1+F4}{2}$

$F3$   FT1   $F4$

$P2<P1$   $P2<P1$

$2P2<DFIL$

$P3<<P1$

FT2   FC

DF3

DFIL

$DFIL<DF2 \simeq 2DFIL$

F5      F6

*FIG.4*

FIG.5

CIRCUIT DE DEMODULATION — DD

2

22 — MODULATEUR EN ANNEAU — SM

28

23 — FILTRE PASSE-BANDE FC , DFIL

24 — REDRESSEUR

25 — INTEGRATEUR — SI

26 — COMPARATEUR — SC

21 — MODULATEUR EN ANNEAU

SF(FI)

SE

CORRELATEUR 0

7

SL

BR   BL   FS

3 — GENERATEUR DE SEQUENCE PSEUDOALEATOIRE LOCALE

31 — CIRCUIT DE DECALAGE 1/2 BIT

30 — OSCILLATEUR 2 FS

36  35  34

CNA

SR

BA

SA

33

6 — ETAGE D'ENTREE

FL

5 — OSCILLATEUR

51 — POTENTIOMETRE NUMERIQUE

RF(SQ, FP)

295

296

CNA

294

21a — MODULATEUR EN ANNEAU

27

41

22a — MODULATEUR EN ANNEAU

28a

23a — FILTRE PASSE-BANDE FC , DFIL

24a — REDRESSEUR

25a — INTEGRATEUR

CAN

26a

CORRELATEUR A/R

2a

VA+VR
VA−VR

4

CONTROLEUR

EP 0 428 444 B1

FIG. 6 A

FIG. 6 B

FIG. 7

FIG. 8